# EUROPEAN PATENT APPLICATION

(11) **EP 1 376 719 A1**
(43) Date of publication of application: **02.01.2004**
(21) Application number: 03252548.7
(22) Date of filing: 23.04.2003
(51) Int. Cl.: H01M 2/10, H01M 2/20

(54) **Contact plate assembly for battery pole electrical connection**

(30) Priority: 04.05.2002 KR 2002024629
(71) Applicant: A Tech Co., Ltd., Kimpo-si, Gyeonggi-do (KR); Choi, Kwang Soo, Kimpo-si, Gyeonggi-do (KR); Jung, Byung Hee, Nam-gu, Incheon (KR)
(72) Inventor: Jung, Byung Hee, Nam-gu, Incheon (KR)
(74) Representative: Franks, Robert Benjamin

(57) **Abstract**

The invention relates to a battery pole plate wherein a number of batteries are connected in series without any separate wiring.

The invention is a battery pole plate, disposed inside a battery case(10), comprising a + pole connector(12) and a - pole connector(14), consisting of an electro-conductive elastic material and disposed apart from each other to ensure electric insulation, a pair of + pole plates(16) disposed at the opposite ends of the + pole connector(12), a pair of - pole plates(18) disposed at the opposite ends of the - pole connector(14) and at inner positions from the + pole plates(16), and fixing members(20) each disposed between the + pole plate(16) and the - pole plate(18) to fix and mutually insulate the electrically opposing pole plates(16, 18), wherein the pole places(18) and fixing plates(20) are formed with openings(22 and 23) to admit the + pole(26) of a battery(1) so as to allow for the + pole(26) of the battery(1) to contact the + pole plate(16) through the openings(22, 23).

## Description

### FIELD OF THE INVENTION

The present invention relates to a battery pole plate or battery pole plates and more particularly to a battery pole plate or battery pole plates of new construction wherein a number of batteries are connected in series without any separate wiring to be able to increase productivity as well as to prevent the shirt-circuiting of the + poles of batteries with the - pole plates.

### BACKGROUND OF THE INVENTION

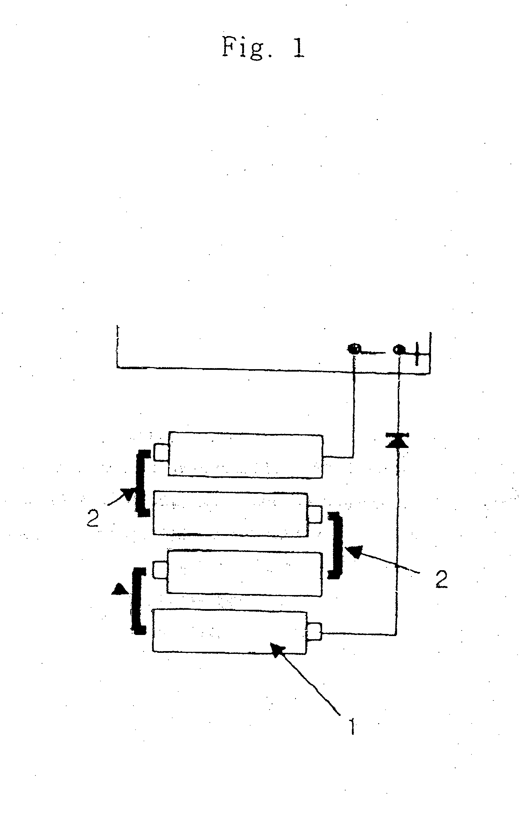

Generally, the batteries used in electronic appliances are in the form of a cylinder and are provided with + poles in a projected form and with - poles in a plane form. A battery case intended to receive such a battery is usually provided inside between the oppositely-positioned + pole and - pole plates connected to an electronic appliance, so that when a battery is inserted in the battery case of the electronic appliance, the + and - poles of the battery come in contact with the above-described pole plates to supply a direct current to the electronic appliance. Further, in the case of such electronic appliances, there are more cases in which many batteries are connected in series to produce a high voltage than the case of using a single battery. In that case, as shown in Figure 1, a number of pole plates 2 are disposed on opposite sides inside a battery case to accommodate the batteries 1 inserted reversely to one another to achieve a serial connection.

At that time, however, if the batteries are connected contrarily or incorrectly, the electric current will be fed reversely, with the result that the electronic appliance may not work or even get into trouble. Therefore, on the battery case of such an electronic appliance, a guiding words or sketch is shown indicating correct connection of batteries to help a user to find the correct arrangement. However, inserting batteries in a correct direction is often tedious or inconvenient and for children or those ignorant in electricity, the work could be difficult.

Specially, in the case of such battery cases, a diode is connected in the middle of a circuit in preparation for a possible contrary orientation of batteries 1 to thereby prevent reverse current through an electronic appliance. As the result, the cost of the appliances becomes high due to the diodes and the consumption of electricity by the diodes is also caused.

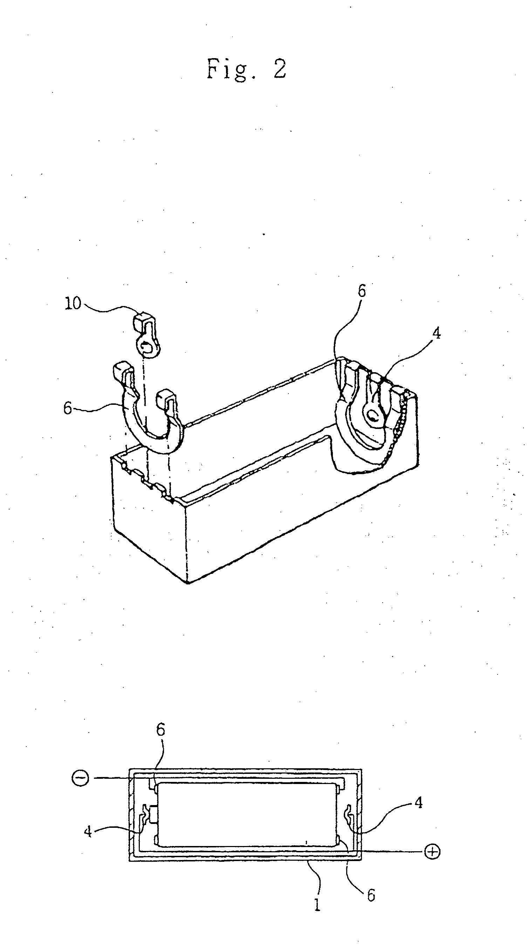

On the other hand, in order to resolve the above problem, some patent applications such as Korean Patent Applications 20-1992-9034, 10-1992-3649, 20-1992-10441 etc. disclose that, as shown in Figure 2 , + pole plates 4 are disposed on the opposite sides inside a battery case and - pole plates 6 are disposed at inner positions around the + pole plates, and then the pole plates having the same polarity are connected to one another by using separate wiring to allow mutual electrical conduction, whereby a polarity-less battery case results. Accordingly, when a battery 1 is inserted between the pole plates at the opposite sides, the raised + pole of the battery 1 is contacted with the + pole plate 4 while the flat - pole of the battery is contacted with the - pole plate 6, so that the forward output of electricity is always insured regardless of the orientation of the battery 1.

However, a problem is associated with this type of battery case, in that the fabricating process is very complicated with an increased cost, because of the complicated structure of the pole plates 4 and 6 and the need for separate wiring for connecting respective pole plates 4 and 6.

Further, another problem is that such battery cases can be used only for the batteries having the same length as the battery cases. Namely, even under the same specification class, a little variances exist in the dimension of various parts of a battery dependent on the manufacturers of the batteries. Thus, for example, when a little shorter battery 1 is inserted, the + or - pole of the battery is not tightly contacted with the + or - pole plate 4 or 6, whereas when a little longer battery 1 is inserted, the root part of + pole of the battery comes to be in contact with the - pole plate 6 causing a short circuit. In the last case, the + pole plate 4 can be fixed at a corrected position to avoid the situation, but the difficulty in inserting and removing the battery 1 in and from the inside between the oppositely positioned pole plates 4 and 6 remains.

Additionally, a serial connection of such pole plates for batteries requires separate wiring to inter-connect the electric poles, which represents another problem of cost increase due to the complicated arrangements and processes.

### SUMMARY OF THE INVENTION

The present invention is intended, for the purpose of resolving the above-described probleme, to provide a battery pole plate and battery pole plates of a new construction, which are simple in the structure and which allow the use of various batteries with different lengths and also allow the electric connection of the batteries in series without any separate wiring, whereby the increase in the productivity is achieved.

### BRIEF DESCRIPTION OF THE DRAWINGS

Figure 1 shows a circuit arrangement for a general battery case,
Figure 2 shows a conventional non-polar battery case as a reference,
Figure 3 shows a battery pole plate according to the first embodiment of the invention,
Figure 4 shows a battery pole plate in operation according to the invention,
Figure 5 shows a perspective view of the battery pole plates according to the second embodiment of the invention,
Figure 6 shows an assembling process for battery pole plate(s) according to the invention,
Figure 7 shows a perspective view of the battery pole plates according to the third embodiment of the invention,
Figure 8 shows an elevational view in cross section corresponding to Figure 8, and
Figure 9 shows a perspective view of the battery pole plates according to the fourth embodiment of the invention.

### DETAILED DESCRIPTION OF THE INVENTION

The above-indicated object is achieved according to an aspect of the invention by a battery pole plate, disposed inside a battery case(10), comprising a + pole connector(12) and a - pole connector(14), consisting of an electro-conductive elastic material and disposed apart from each other to ensure electric insulation, a pair of + pole plates(16) disposed at the opposite ends of the + pole connector(12), a pair of - pole plates(18) disposed at the opposite ends of the - pole connector(14) and at inner positions from the + pole plates(16), and fixing members(20) each disposed between the + pole plate(16) and the - pole plate(18) to fix and mutually insulate the electrically opposing pole plates(16, 18), wherein the - pole plates(18) and fixing plates(20) are formed with openings(22 and 23) to admit the + pole(26) of a battery(1) so as to allow for the + pole(26) of the battery(1) to contact the + pole plate(16) through the openings(22, 23).

The above-indicated object is also achieved according to another aspect of the invention by a battery pole plate, disposed inside a battery case(10), comprising pole connecting plates(30) consisting of an electro-conductive material, a pair of + pole platee(16) and a pair of - pole plates(18), each pair extending upright at the opposite ends of each pole connecting plate(30) and insulating fixing members(20) disposed inside the + pole plates(16) or outside the - pole plates(18), wherein the - pole plates(18) and fixing plates(20) are formed with openings(22 and 23) to admit the + poles(26) of batteries(1), the + and - pole plates(16 and 18) are disposed laterally to each other at opposite ends of the pole connecting plates(30), in such a manner that the pole plates with the same polarity(16, 18) are mutually opposed.

In another aspect of the invention, it may be provided that on at least one side of each fixing member(20), a plurality of projections(32) are formed, and insertion holes(34) corresponding to the projections(34) are formed in the + pole plates(16) and/or - pole plates(18) to fix the fixing members(20) on the + pole plates(16) and/or - pole plates(18) by the insertion of the projections(34) into the insertion holes(34).

According to another variant of the invention, the fixing members(20) are formed in the form of a cap to have insertion sections(40), a pole plate(16) and a pole plate(18) being fitted in each of the insertion sections(40), wherein inside an insertion section(40), protruded walls(42) are formed to position the + pole plate(16) and - pole plate(18) separately at a predetermined spacing so as to fix and mutually insulate the + pole plate(16) and - pole plate(18) through fitting of the + pole plate(16) and - pole plate(18) into the fixing member(20).

Some preferred embodiments of the present invention are described in detail below with reference to the accompanying drawings.

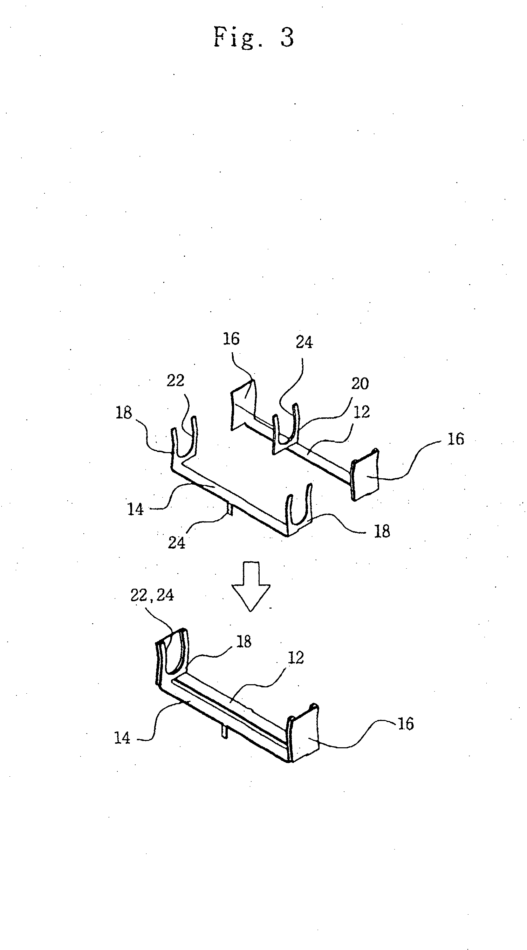

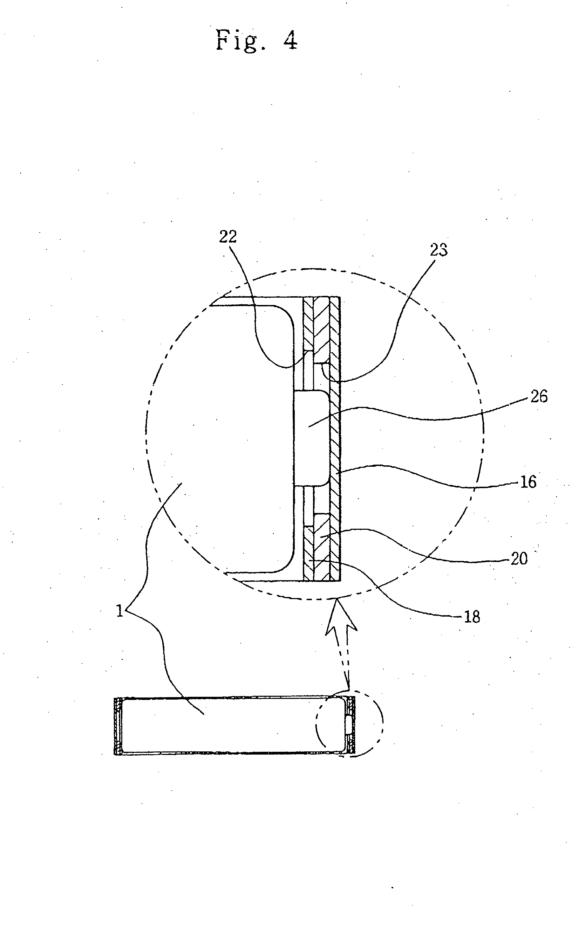

Figures 3 and 4 show the first embodiment of a battery pole plate according to the invention for holding a single battery 1. As in a conventional case, a battery 1 can be tightly inserted in a battery case 10.

A battery pole plate comprises a + pole connector 12 and - pole connector 14, disposed apart so as to be electrically insulated from each other, a pair of + pole plates 16 at the opposite ends of the + pole connector 12, a pair of - pole plates 18 at the opposite ends of the - pole connector 14 and at positions inside the + pole plates 16, and a pair of fixing members 20 positioned between the adjacent + and - pole plates 16 and 18 to fix and mutually insulate the + and - pole plates 16 and 18.

The + pole connector 12 and - pole connector 14, which are formed in the form of a slender plate from a copper plate etc. excellent in conductivity and elasticity, are disposed parallel to each other and at a predetermined spacing on the inner bottom surface of the battery case 10. The above-described + pole plate 16 and - pole plate 18 are formed integrally with the pole connectors 12 and 14, such that they are bent upward at 90°at the opposite ends of pole connectors 12 and 14. The pole plates 16 and 18 are made with their width larger than twice the width of the + pole connector 12 or the - pole connector 14, and formed so that the pole connectors 12 and 14 are disposed offset to one sidc and the other side in order that the + pole connector 12 and the - pole connector 14 are not touched edgewise when the + and - pole plates 16 and 18 are assembled or overlapped, as seen in Figure 3.

The fixing members 20 are made by forming a hot-melt material, which exerts adhesive power when fused, in a sheet form. After inserting the fixing members 20 between the + pole plates 16 and the - pole plates 18, heat is applied thereto to attach the + and - pole plates 16 and 18 and at the same time insulate the sandwiching plates 16 and 18 from each other Preferably, the thickness of the fixing members 20 is about 0.5 mm.

Further, the - pole plates 18 and the fixing members 20 are formed at their central area with openings 22 and 23 to admit the + poles 26 of batteries 1. The dimension of the openings 22 and 23 is decided to be larger than the + poles 26 of batteries 1 but smaller than the - poles 28 of batteries 1, so that only the + poles 26 of batteries 1 may pass through these openings to contact the - pole plates 16. At this time, the - pole connector 14 is formed at its middle point with an electric contact 24 to pass through the case bottom to be connected to a power terminal of an electronic appliance. It is to be noted that as shown in Figure 4, the openings 23 of fixing members 20 are preferably dimensioned smaller in their width or diameter than the openings 22 of - pole plates 18, so that the + poles 26 of the batteries 1 may not be brought into contact with the - pole plates 18 even when the batteries 1 are moved around.

Therefore, when the pole plates so constructed as described above are mounted in a battery case 10 and a battery 1 is inserted between the pole plates, as seen in Figure 4, the + pole 26 of the battery 1 is contacted with the + pole plate 16 through the openings 22 and 23 of the - pole plate 18 and the fixing member 20, at one end of the battery case, while the - pole 28 of the battery 1 is contacted with the - pole plate 18 at the other end of the case. The forward output of power supply to the power terminals of electric appliances is always ensured, no matter in which direction a battery may be inserted, because a + pole plate 16 with a + pole plate 16 at the opposite end and a - pole plate 18 with a - pole plate 18 at the opposite end are electrically connected through the + pole connector 12 and the - pole connector 14 based on the original construction.

In this battery pole plate constructed as above, the + pole plates 16 and - pole plates 18 are respectively formed integrally with the + pole connector 12 and - pole connector 14, and are elastically biased in the inward directions and joined together by means of fixing members 20. Accordingly, when a battery 1 is fitted-in between the pole plates, the + pole plate 16 and the - pole plate 18 are thrusted outward, tightly contacting the + pole and - pole 26 and 28 of the battery 1 and so batteries with various lengths can be used without a risk of short-circuiting between the + poles 26 of the batteries 1 and the - pole plates 18. Further, an advantage of cost reduction is realized because separate wiring is not needed based on the fact that as already indicated above, the + pole plates 16 and the - pole plates 18 are respectively originally in electric connection, even though they are apart from the ones with the same polarities, by means of the + and - pole connectors 12 and 14.

For the present embodiment, although the fixing members 20 made of hot-melt material are advantageously used to attach the + and - pole plates 16 and 18 through heating, the fixing members 20 can be made of ordinary but non-conductive synthetic resins, in conjunction with the use of separate adhesives for mutual adhesion of the + and - pole plates 16 and 18.

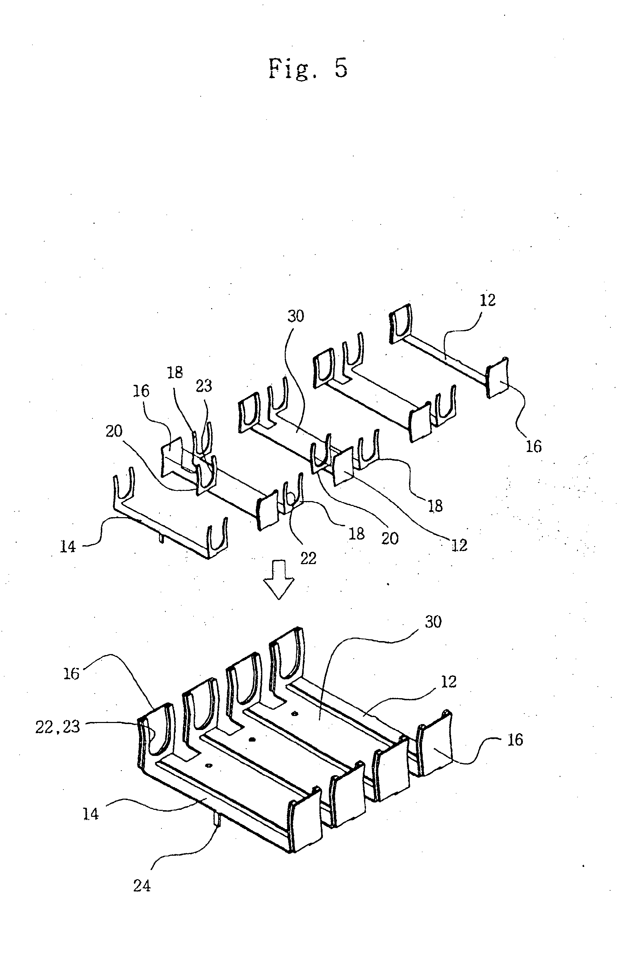

Figure 5 shows another embodiment of the invention in which as an example, 4 pairs of pole plates are electrically inter-connected so that 4 batteries 1 inserted between those pole plates can be connected in electric series.

According to this embodiment, a set of battery pole plates comprises pole connecting plates 30 of electro-conductive material, + pole plates 16 and - pole plates 18, formed by bending upward the opposite ends of the pole connecting plates 30, and fixing members 20 positioned inside the + pole plates 16 on one side or outside the - pole 28 on the other side.

The above-described pole connecting plates 30 are each formed in the form of a long plate, as cut-out from a large copper plate etc. excellent in conductivity and elasticity, as for the + or - pole connectors 12, 14 in the first embodiment. The + pole plates 16 and the - pole plates 18 are formed integrally with the pole connecting plates 30 at their opposite ends, and subsequent to this forming, bent upward at the right angle, wherein the pole plates with the same polarities are positioned opposite to one another at the opposite ends of the pole connecting plates 30. The fixing members 20 are positioned between the + pole plates 16 and the - pole places 18, when positioning the - pole plates 18 inside the + pole plates 16 in accordance with the assembling procedure to be described later, so as to function as insulators and securers. As in the foregoing case, in the central portions of the - pole plates 18 and the fixing members 20, openings 22 and 23 are formed to allow the protruded + poles 26 of batteries 1 to pass through.

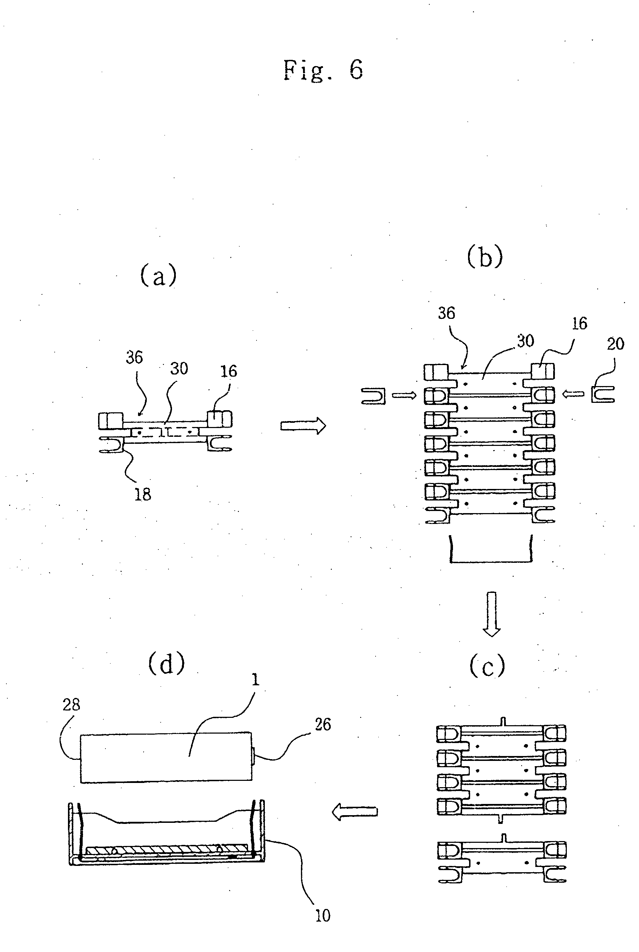

Figure 6 shows the assembling process for assembling such a battery pole plate and battery pole plates. The assembling prccess comprises (a) the primary forming step in which a plate of conductive and elastic material is machined to form a primary pole plate 36(corresponding to what was called as a battery pole plate in the foregoing) including a pole connecting plate 30, formed integrally with a pair of + pole plates 16 and a pair of- pole plates 18 at the opposite ends of the pole connecting plate 30, (b) the fixing or adhesion step in which the primary pole plates 36 having undergone the primary forming step are arranged such that the - pole plates 18 of one primary pole plate 36 are positioned inside the + pole plates 16 of another primary pole plate 36, with the fixing members 20 interposed between the + pole plates 16 and the - pole plates 18 for fixing the both pole plates, (c) a pole cutting step in which the primary pole plate 36 is longitudinally cut or this step is repeated to yield a required number and (d) a mounting step for mounting the primary pole plate or plates 36 so processed and finalized in a battery case 10.

At this time, in the above fixing step (b), whereas pole plates 18 or + pole plates 16 can be fixed to the fixing members 20 in order after the fixing members 20 are beforehand held to an inside of projected + poles 26 or outside of - poles 28, the + pole plates 16 and - pole plates 18 are caused to overlap and therebetween fixing members 20 can be interposed to secure the pole plates 16 and 18, as the case may be. Further, a number of battery pole plates 36 can be connected in electric series by repeating the above fixing steps (b). In the pole separating step (c), the pole connecting plate 30 is sheared longitudinally at the middle position to separate the + pole plates 16 at the opposite ends from the - pole plates 16 at the opposite ends, so that a + pole connector 12 and a - pole connector 14 as described in the first embodiment may result from the separated pole connecting plate 30. When the + pole connector 12 and - pole connector 14 are formed by cutting the pole connecting plate 30 along the middle part, a small tap may be left, which may be bent downward to produce the electric contact 24 as described before.

By conducting the step (a), repeatedly conducting the step (b) and then inserting batteries 1, the electric serial connection of batteries can be realized through electric sequential communication of the + and - electric plates 16 and 18. As the result, there is an advantage that a number of batteries 1 can be connected in series without a need for separate wiring.

In the present embodiment, although the upward bending of the + and - pole plates 16 and 18 integrally formed at the opposite ends of a pole connecting plate 30 was omitted, this bending of the + and - pole plates 16 and 18 is preferably conducted after the primary forming step (a).

As such a manufacturing process permits the separation of the required number of battery pole plates from their serially connected pool, different manufacturing processes depending on the number of the batteries 1 to be connected in series need not be conducted. In other words, there is an advantage that a single method makes it possible to produce various types of battery holders holding various number of serially connected batteries 1. In addition, the structures are very simple because of using no separate wiring.

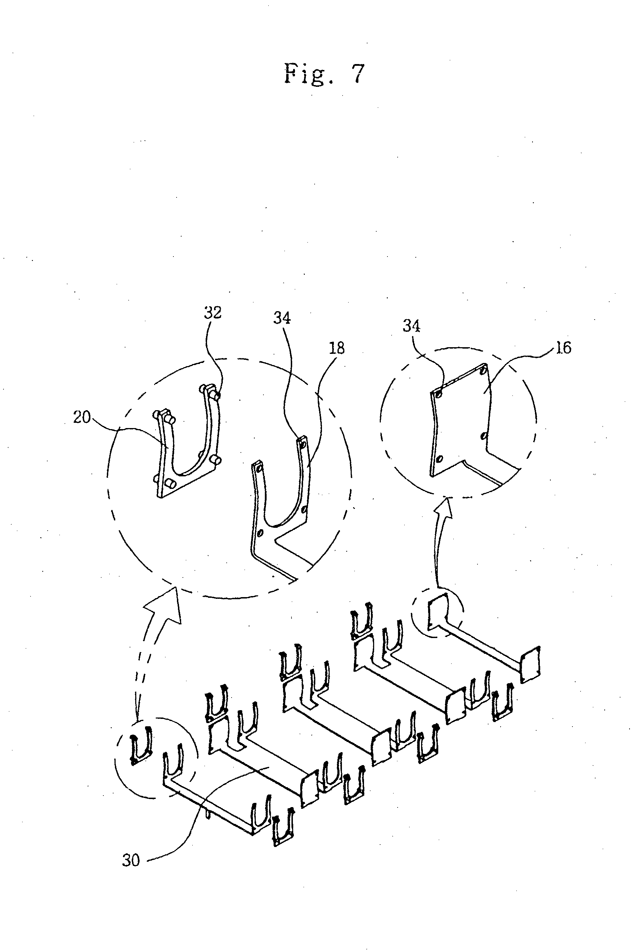

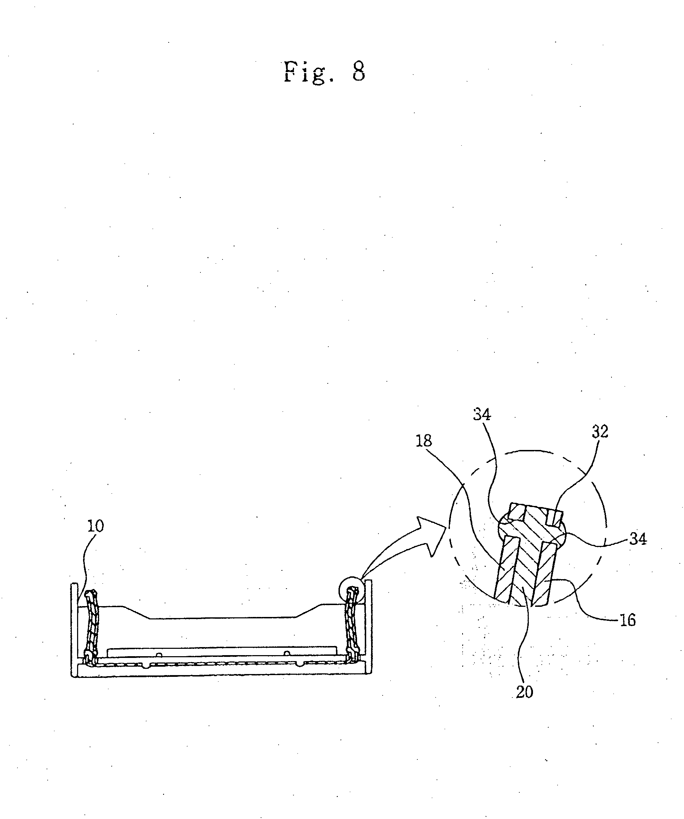

Referring to Figures 7 and 8 showing the third embodiment of the invention, a plural projections 32 are formed on the front and back surfaces of the fixing members 20 and insertion holes 34 are formed in the + and - pole plates 16 and 18 to correspond to the above projections 32, so that the insertion of the projections 32 into the holes 34 may secure the fixing members 20 between the + and - pole plates 16 and 18.

As described in the above, a mechanical fixing of the fixing members 20 between the + and - pole plates 16 and 18 ensures a firmer securement of pole plates 16 and 18 and simpler assembling process as compared to the use of adhesive sheets like a hot-melt etc.

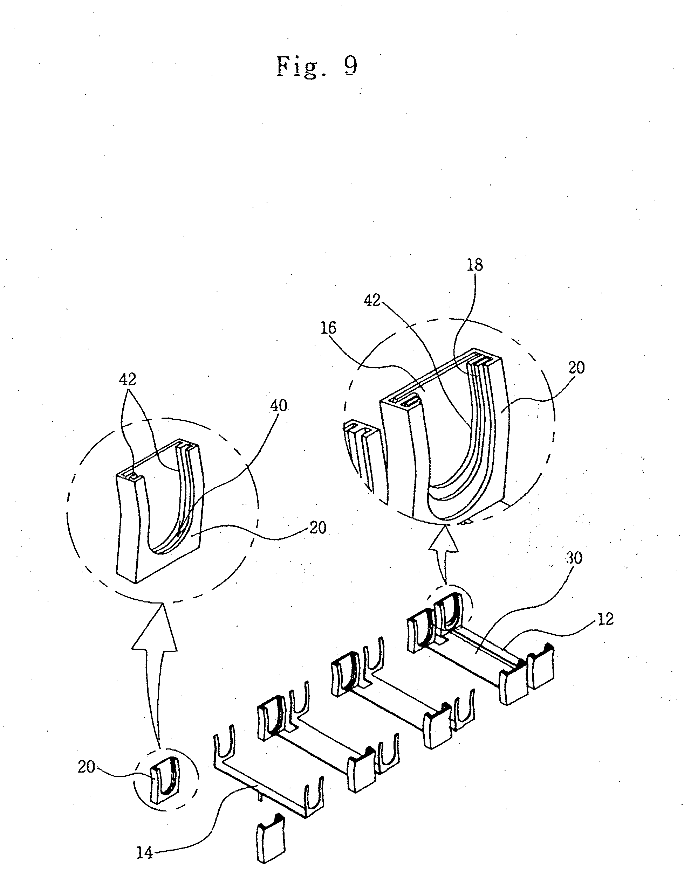

Figure 9 shows the fourth embodiment of the invention, in which fixing members 20 are formed in a cap form adapted for a fitted engagement of + and - pole plates 16 and 18 therein. Namely, the fixing members 20 include insertion sections 40 through which + and - pole plates 16 and 18 can pass from the downside or upside and in which the + and - pole plates 16 and 18 are fitted tight, as projected wall segments 42 are formed in the insertion sections 40 to define compartments for holding the + and - pole plates 16 and 18, as shown in Figure 9. Thus, the + and - pole plates 16 and 18 can be fixed and insulated from each other, by fitting the + and - pole plates 16 and 18 in the insertion sections 40 of fixing members 20.

Such battery cases 10, in which the + and - pole plates 16 and 18 are in fitted engagement with the fixing members 20, facilitate the assembling work and structural rigidity including the + and - pole plates 16 and 18.

As described above, according to the present invention, the + pole plates 16 and - pole plates 18 are disposed in overlapped relation at the inner opposite ends of a battery case 10, the + pole plates 16 and - pole plates 18 are fixed and mutually insulated by using fixing members 20 interposed between these + and - pole plates 16 and 18, and the pole plates 16 and 18 are electrically inter-connected and at the same time can be elastically biased under the use of pole connectors 12 and 14 and pole connecting plates 30, whereby the overall structure becomes simple, and batteries with somewhat different lengths can not only be used but also a number of battery pole plates or batteries can be connected in series without separate wiring to contribute to an increased productivity.

## Claims

1. A battery pole plate, disposed inside a battery case(10), comprising a + pole connector(12) and a - pole connector(14), consisting of an electro-conductive elastic material and disposed apart from each other to ensure electric insulation, a pair of + pole plates(16) disposed at the opposite ends of the + pole connector(12), a pair of - pole plates(18) disposed at the opposite ends of the - pole connector(14) and at inner positions from the + pole plates(16), and fixing members(20) each disposed between the + pole plate(16) and the - pole plate(18) to fix and mutually insulate the electrically opposing pole plates(16, 18), wherein the - pole plates(18) and fixing plates(20) are formed with openings(22 and 23) to admit the + pole(26) of a battery(1) so as to allow for the + pole(26) of the battery(1) to contact the + pole plate(16) through the openings(22, 23).

2. A battery pole plate, disposed inside a battery case(10), comprising pole connecting plates(30) consisting of an electro-conductive material, a pair of + pole plates(16) and a pair of - pole plates(18), each pair extending upright at the opposite ends of each pole connecting plate(30) and insulating fixing members(20) disposed inside the + pole plates(16) or outside the - pole plates(18), wherein the - pole plates(18) and fixing plates(20) are formed with openings(22 and 23) to admit the + poles(26) of batteries(1), the + and - pole plates(16 and 18) are disposed laterally to each other at opposite ends of the pole connecting places(30), in such a manner that the pole plates with the same polarity(16, 18) are mutually opposed.

3. A battery pole plate of claim 1 or 2, wherein on at least one side of each fixing member(20), a plurality of projections(32) are formed, and insertion holes(34) corresponding to the projections(34) are formed in the + pole plates(16) and/or - pole plates(18) to fix the fixing members(20) on the + pole plates(16) and/or - pole plates(18) by the insertion of the projections(34) into the insertion holes(34).

4. A battery pole plate of claim 1 or 2, wherein the fixing members(20) are formed in the form of a cap to have insertion sections(40), a pole plate(16) and a pole plate(18) being fitted in each of the insertion sections(40), wherein inside an insertion section(40), protruded walls(42) are formed to position the + pole plate(16) and - pole plate(18) separately at a predetermined spacing so as to fix and mutually insulate the + pole plate(16) and - pole plate(18) through fitting of the + pole plate(16) and - pole plate(18) into the fixing member(20).
